# EUROPÄISCHE PATENTANMELDUNG

(11) **EP 0 673 815 A2**
(43) Veröffentlichungstag der Anmeldung: **27.09.1995**
(21) Anmeldenummer: 95105110.1
(22) Anmeldetag: 09.09.1993
(51) Int. Cl.: B60T 8/36, F16K 31/06

(54) **Ventilanordnung, insbesondere Elektromagnetventilanordnung für schlupfgeregelte Kraftfahrzeugbremsanlagen**

(30) Priorität: 11.09.1992 DE 4230393; 30.03.1993 DE 4310265
(62) Teilanmeldung aus: 93919307.4
(71) Anmelder: ITT Automotive Europe GmbH, D-60488 Frankfurt am Main (DE)
(72) Erfinder: Weisbrod, Helmut, D-61231 Bad Nauheim (DE); Zutt, Ulrich, D-65527 Niedernhausen (DE)

(57) **Zusammenfassung**

Die Erfindung betrifft eine Ventilanordnung, mit einem ersten Ventilschließglied (4), insbesondere hydraulisch ansteuerbaren Rückschlagventil, sowie mit einem weiteren, vorzugsweise mittels Magnetanker und Magnetspule steuerbaren Ventilschließglied (3), das in einer Ventilaufnahmebohrung (2) des die Ventilanordnung aufnehmenden Ventilgehäuses (1) angeordnet ist, wobei beide Ventilschließglieder (3, 4) wirkungsmäßig unabhängig voneinander schaltbar sind, und gemeinsam in der Ventilaufnahmebohrung (2) des weiteren Ventilschließgliedes (3) angeordnet sind. Um eine kompakte und einfache Herstellung der Ventilanordnung sicherzustellen, ist vorgesehen, daß ein als Stanzteil ausgeführtes Halteteil (16, 16') das erste Ventilschließglied (4) im Ventilaufnahmekörper (6) führt.

## Beschreibung

Die Erfindung betrifft eine Ventilanordnung, insbesondere Elektromagnetventilanordnung für schlupfgeregelte Kraftfahrzeugbremsanlagen nach dem Oberbegriff des Anspruchs 1 und stellt eine weitere Ausgestaltung des Gegenstandes der Erfindung nach Patent .............(P 42 30 393.1) dar.

Die im Hauptpatent beschriebene Ventilanordnung erfordert abhängig vom Bauvolumen eine zeitintensive und genaue Bearbeitung des ein- bzw. zweiteilig ausgeführten Ventilaufnahmekörpers. Dies ist hinsichtlich einer großzügigen Dimensionierung des Druckmitteldurchsatzes außerdem hinderlich.

Daher ist es die Aufgabe der Erfindung, eine möglichst kompaktbauende Ventilanordnung vorzusehen, die eine einfache Herstellung und Montage der Ventile bei uneingeschränkter Gewährleistung der Funktionssicherheit, insbesondere im Sinne eines verbesserten Mengendurchflusses, ermöglicht.

Diese Aufgabe wird erfindungsgemäß durch die den Patentanspruch 1 kennzeichnenden Merkmale gelöst, wonach in die Ventilaufnahmebohrung ein Ventilaufnahmekörper eingesetzt ist, dessen dem weiteren Ventilschließglied abgewandte Stirnfläche eine im wesentlichen topfförmige Öffnung aufweist, die ein das erste Ventilschließglied positionierendes Halteteil aufnimmt.

Durch die in den Unteransprüchen aufgezeigten Maßnahmen sind zweckmäßige Ausbildungen der Erfindung angegeben, die im Zusammenhang mit den weiteren Merkmalen und Vorteilen der Erfindung nachfolgend anhand mehrerer Zeichnungen näher dargestellt und erläutert werden.

Es zeigen:
- Figur 1: eine Draufsicht auf die den Haltekörper aufweisende Stirnfläche des Ventilaufnabmekörpers,
- Figur 2: zur Verdeutlichung der Seitenansicht des Ventilaufnahmekörpers einen Querschnitt an der Schnittstelle A-B nach Figur 1, innerhalb einer Ventilaufnahmebohrung eines Elektromagnetventils.

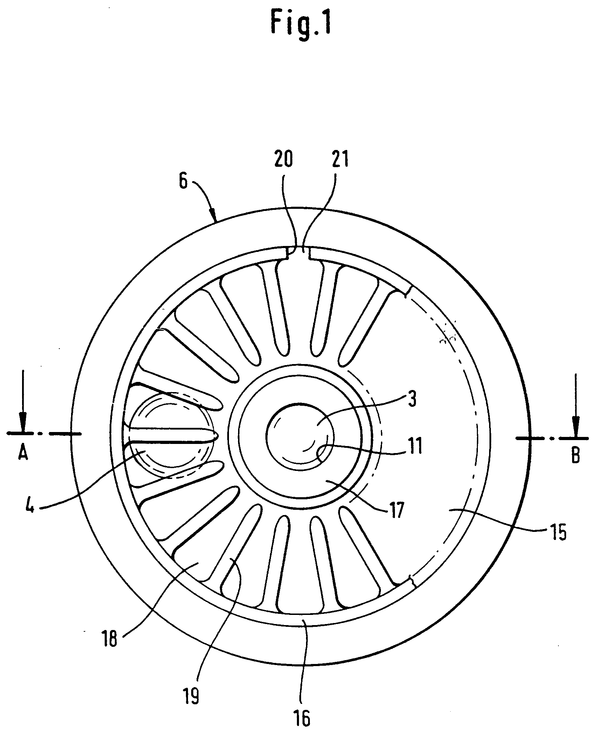

Es zeigt die Figur 1 das erste Ventilschließglied 4 außermittig im hohlzylinderförmigen Ventilaufnahmekörper 6 angeordnet mit dem zentralen Druckmitteldurchlaß 11 für das weitere Ventilschließglied 3. Das als Rückschlagventil wirksame erste Ventilschließglied 4 ist als Kugelventil oder Plattenventil ausgeführt. Der Ventilaufnahmekörper 6 weist ein im wesentlichen scheibenförmiges Halteteil 16 auf, das in einer topfförmigen Öffnung 15 dem Ventilaufnahmekörper 6 angepaßt ist. Die Stirnfläche des Halteteils 16 weist eine mit einer Tellerfeder vergleichbare Gestalt auf, so daß ein relativ leicht, einfach und kleinbauendes Halteteil 16 geschaffen ist. Infolge der Vielzahl der zwischen den einzelnen Zungen 19 gebildeten Durchbrüche 18 am Halteteil 16 ergibt sich eine gleichmäßig verteilte und großzügig dimensionierte Durchtrittsfläche für das Fluid. Ferner ergibt sich ein im Querschnitt vergrößerter Kanalanschluß zur Druckmittelquelle 13, da das Halteteil 16 mit einem nur relativ schmalen Steg bzw. Bund 20 in der Öffnung 15 des Ventilaufnahmekörpers 6 fixiert ist. Ein Schlitz 21 auf Höhe eines der Durchbrüche 18 trennt den Bund 20 in zwei Endabschnitte, so daß ohne die Notwendigkeit einer großen Herstellgenauigkeit durch die elastisch oder plastisch verformbare Eigenschaft des Halteteils 16 Jederzeit eine paßgerechte Anordnung des Halteteils 16 in der Öffnung 15 im Ventilaufnahmekörper 6 gewährleistet ist. Das erste Ventilschließglied 4 wird durch die in Radialrichtung symmetrisch über den Umfang verteilten Zungen 19 am Halteteil 16 in der gewünschten Position zum Druckmitteldurchlaß 8 ausgerichtet. Die Vielzahl der Zungen 19 an dem Halteteil 16 haben den Vorteil, daß das Teil 16 ohne Verdrehsicherung willkürlich in die Öffnung 15 eingebracht werden kann.

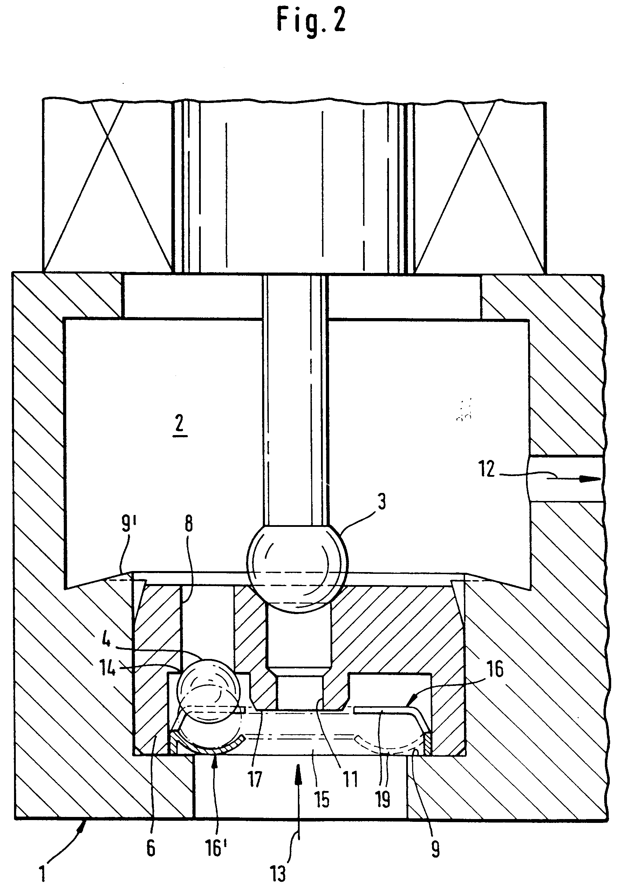

Die Figur 2 zeigt einen Querschnitt senkrecht zu der in Figur 1 ersichtlichen Stirnfläche des ersten Ventilschließgliedes 4. Ferner befindet sich in der gezeigten Schnittebene das weitere Ventilschließglied 3, das in der zentralsymmetrisch im Ventilaufnahmekörper 6 gelegenen Bohrung zur Anlage gelangen kann. Beide Ventilschließglieder 3, 4 sind in einem einzigen Ventilaufnahmekörper 6 geführt. Das erste, als Kugelrückschlagventil ausgebildete Ventilschließglied 4 ist an einem zur Symmetrieachse des Ventilaufnahmekörpers 6 koplanaren Druckmitteldurchlaß 8 angeordnet. Der erweiterte Übergang des Druckmitteldurchflusses 8 in die topfförmige Öffnung 15 ist als Ventilsitz 14 gestaltet. Der das Kugelrückschlagventil aufnehmende Druckmitteldurchlaß 8 führt zur Druckmittelquelle 13, beispielsweise zum Bremsdruckgeber einer schlupfgeregelten Bremsanlage. Die vom Halteteil 16, 16' abgewandte Stirnfläche des Ventilaufnahmekörpers 6 weist den zum weiteren Ventilschließglied 3 gehörenden Druckmitteldurchlaß 11 auf, welcher am Druckmittelverbraucher 12, beispielsweise an einer Radbremse, angeschlossen ist. Die der Druckmittelquelle 13 in der Ventilaufnahmebohrung 2 zugewandte Bohrungsstufe 9 ist durch den schmalen Bund 20 des Haltekörpers 16, 16' in ihrem hydraulischen Durchlaßquerschnitt derart großzügig gestaltet, daß Druckmittel ungehindert von der Druckmittelquelle 13 die Durchbrüche 18 am Halteteil 16, 16' passieren kann. Ein Herausfallen des Kugelrückschlagventils ist infolge einer ausreichenden Überdeckung der Kugel durch die Zungen 19 verhindert, wobei die Länge der Zungen 19 auf die erforderliche Überdeckung des Ventilschließgliedes 4 begrenzt ist. Eine weitere dem Druckmittelverbraucher 12 zugewandte Bohrungsstufe 9' im Ventilgehäuse 1 bildet einen vergrößerten Öffnungsquerschnitt, um das Einfügen des Ventilaufnahmekörpers 6 in die Ventilaufnahmebohrung 2 zu ermöglichen. Diese Bohrungsstufe 9' ist beispielhaft als Verstemmstelle an der Berandung des Ventilaufnahmekörpers 6 ausgelegt. Der Ventilaufnahmekörper 6 nimmt in Richtung der zentral gelegenen Durchlaßbohrung 11 das weitere, vorzugsweise elektromagnetisch betätigbare Ventilschließglied 3 auf. Zur Zentrierung und Abdichtung der Durchgangsbohrung 11 ist diese in Richtung des Ventilschließgliedes 3 kegelförmig erweitert, so daß in der Schließstellung des Ventilschließgliedes 3 die Druckmittelverbindung zwischen der Druckmittelquelle 13 und dem Druckmittelverbraucher 12 nur über das Kugelrückschlagventil in Richtung der Druckmittelquelle 13 und damit zur Druckentlastung des Druckmittelverbrauchers 12 erfolgen kann. Durch Stanzen des Halteteils 16 aus Blechen geringer Stärke ist eine einfache Formgebung möglich, die über die Tellerfederstruktur hinaus nahezu alle gewünschten geometrischen und wirkungstechnischen Eigenschaften ermöglicht. Diese werden beispielhaft an zwei unterschiedlich dargestellten Profilen des Halteteils 16, 16' in der Figur 2 verdeutlicht, die eine zweckmäßige Kugelventilführung, beispielsweise mittels einer pfannenförmigen Aufnahme ermöglichen, und bei Bedarf auch eine wirkungsmäßig elastische Ventilrückstelleigenschaft, beispielsweise durch eine Blattfeder-Zungenwirkung, aufweisen. Bei Verwendung von Stanzblechen geringer Stärke zur Herstellung des Halteteils 16, 16', eignet sich zur Ausbildung der pfannenförmigen Struktur am Halteteil 16' ein durch den Druckmitteldurchlaß 8 auf das Kugelrückschlagventil und auf das ursprüngliche Scheibenprofil des Halteteils 16 ein wirkender Umformvorgang, der durch ein Einprägeverfahren des Kugelrückschlagventils in eine Negativform zum abbildungsgemäßen pfannenförmigen Profil des Halteteils 16' führt. Die plastische Umformung des Halteteils 16 zur Struktur des pfannenförmigen Halteteils 16' ist auf den Einprägebereich der Kugel im Halteteil 16 begrenzt, so daß im Gegensatz zur Darstellung in Figur 2, das Halteteil 16 nur derart partiell im Kugelbereich plastisch verformt wird, daß die Rückschlagventilfunktion des Ventilschließgliedes 4 gewährleistet ist.

Gerade für die bei schlupfgeregelten Kraftfahrzeugbremsanlagen verwendete Elektromagnetventilanordnung sind diese Ventilfixier- und Betätigungs-Eigenschaften von Bedeutung. Zur Steuerung des Bremsdruckverlaufs zwischen der Radbremse (Druckmittelverbraucher) und dem Bremsdruckgeber (Druckmittelquelle) befinden sich elektromagnetisch ansteuerbare Ventilschließglieder. Das hierzu jedem Ventilschließglied parallel zugeordnete und schaltbare Kugelrückschlagventil ermöglicht zum Zwecke der raschen Druckentlastung der zugehörigen Radbremse jederzeit eine Vorrangsteuerung gegenüber dem zugehörigen elektromagnetisch betätigbaren Ventilschließglied, sobald der Fahrer die Betätigung des Bremsdruckgebers unterbricht.

Der Erfindungsgegenstand zeichnet sich somit durch eine strömungsgünstige, äußerst kompakte und leicht zu montierende Ventilanordnung aus, ohne hierbei kostenintensive Maßnahmen hervorzurufen. Gerade unter dem Gesichtspunkt einer möglichst kompakten Bauweise läßt die Erfindung es zu, das als Kugelrückschlagventil ausgebildete Ventilschließglied unmittelbar im Ventilsitzkörper des elektromagnetisch ansteuerbaren Ventilschließgliedes zu integrieren. Bei einer Vielzahl von baulich nebeneinander in einem blockförmigen Ventilgehäuse angeordneten Elektromagnetventil wird hierzu kein zusätzlicher Bauraumbedarf benötigt.

### Bezugszeichenliste

- 1: Ventilgehäuse
- 2: Ventilaufnahmebohrung
- 3: Ventilschließglied
- 4: Ventilschließglied
- 6: Ventilaufnahmekörper
- 8: Druckmitteldurchlaß
- 9, 9': Bohrungsstufe
- 11: Druckmitteldurchlaß
- 12: Druckmittelverbraucher
- 13: Druckmittelquelle
- 14: Ventilsitz
- 15: Öffnung
- 16, 16': Halteteil
- 17: Stirnfläche
- 18: Durchbruch
- 19: Zunge
- 20: Bund
- 21: Schlitz

## Patentansprüche

1. Ventilanordnung, insbesondere Elektromagnetventilanordnung für schlupfgeregelte Kraftfahrzeugbremsanlagen, mit einem ersten Ventilschließglied, insbesondere hydraulisch ansteuerbaren Rückschlagventil, sowie mit einem weiteren, vorzugsweise mittels Magnetanker und Magnetspule elektromagnetisch steuerbaren Ventilschließglied, das in einer Ventilaufnahmebohrung des die Ventilanordnung aufnehmenden Ventilgehäuses angeordnet ist, wobei beide Ventilschließglieder im Ventilgehäuse wirkungsmäßig unabhängig voneinander schaltbar sind und wobei die im Ventilgehäuse angeordnete Ventilaufnahmebohrung des weiteren Ventilschließgliedes das erste Ventilschließglied aufweist, nach Patent ..........(Patentanmeldung P 42 30 393.1), dadurch **gekennzeichnet**, daß in die Ventilaufnahmebohrung (2) ein Ventilaufnahmekörper (6) eingesetzt ist, dessen dem weiteren Ventilschließglied (3) abgewandte Stirnfläche eine im wesentlichen topfförmige Öffnung (15) aufweist, die ein das erste Ventilschließglied (4) positionierendes Halteteil (16, 16') aufnimmt.

2. Ventilanordnung nach Anspruch 1, dadurch **gekennzeichnet**, daß das Halteteil (16, 16') eine im wesentlichen scheibenförmige Stirnfläche aufweist, wobei das Halteteil (16, 16') gegenüber der dem weiteren Ventilschließglied (3) abgewandten Stirnfläche (17) des Ventilaufnahmekörpers (6) einen Axialabstand besitzt, zwischen dem das erste Ventilschließglied (4) fixiert ist.

3. Ventilanordnung nach Anspruch 1 oder 2, dadurch **gekennzeichnet**, daß die Stirnfläche des Halteteils (16, 16') mit fluidführenden Durchbrüchen (18) versehen ist, die mit zwei von den Ventilschließgliedern (3, 4) zu steuernden Druckmitteldurchlässen (8, 11) eine Druckmittelquelle (13) mit einem Druckmittelverbraucher (12) verbinden.

4. Ventilanordnung nach einem der vorhergehenden Ansprüche, dadurch **gekennzeichnet**, daß die Stirnfläche des Halteteils (16, 16') im wesentlichen die Struktur einer Tellerfeder aufweist, wobei die Durchbrüche (18) aus zueinander benachbarten Abständen mehrerer Zungen (19) gebildet sind.

5. Ventilanordnung nach Anspruch 4, dadurch **gekennzeichnet**, daß unter der Wirkung der Zungen (19) das erste Ventilschließglied (4) den außermittig zur Rotationsachse des Ventilaufnahmekörpers (6) gelegene Druckmitteldurchlaß (8) zu verschließen vermag.

6. Ventilanordnung nach einem der vorhergehenden Ansprüche 1 bis 5, dadurch **gekennzeichnet**, daß das Halteteil (16, 16') am Außenumfang einen Bund (20) aufweist, der mit einem Schlitz (21) auf Höhe des Durchbruchs (18) in zwei Endabschnitte getrennt ist.

7. Ventilanordnung nach mindestens einem der vorhergehenden Ansprüche, dadurch **gekennzeichnet**, daß das Halteteil (16, 16') durch stanzen von Dünnblech hergestellt ist.
